# EUROPEAN PATENT APPLICATION

(11) **EP 2 433 792 A1**
(43) Date of publication of application: **28.03.2012**
(21) Application number: 11180598.2
(22) Date of filing: 08.09.2011
(51) Int. Cl.: B32B 17/10, B30B 3/02

(54) **Roller pressing unit for forming a laminated glass sheet**

(30) Priority: 09.09.2010 IT TO20100741
(71) Applicant: Bottero S.p.A., Cuneo (IT)
(72) Inventor: Bergia, Alessandro, 12023 Caraglio (IT)
(74) Representative: Jorio, Paolo

(57) **Abstract**

A roller pressing unit (1) for forming a laminated glass sheet(2) has a fixed frame (5), a first pressing roller (8) pivoting on the fixed frame (5) about an axis thereof (8a), a second pressing roller (9) parallel to the first pressing roller (8), and an actuating assembly (15,25) to move the second pressing roller (9) from and towards the first pressing roller (8); the actuating assembly (15,25) comprising a swinging structure (15) hinged to the fixed frame (5) and an actuating device (25) for rotating the swinging structure (15) with respect to the fixed frame (5) about a fixed hinge axis (15a) parallel to the axes of the rollers (8)(9); the actuating assembly (15,25) having a hinging and guiding assembly (20,32) interposed between the swinging structure (15) and the second pressing roller (9) to move the axis (9a) of the second pressing roller in a straight direction (A) intersecting the axis (8a) of the first pressing roller (8) during the rotation of the swinging structure (15) about the fixed hinge axis (15a).

## Description

The present invention relates to a roller pressing unit for forming a laminated glass sheet.

For forming a laminated glass sheet, it is known to interpose at least one intermediate layer of thermoplastic material, e.g. of the type known as PVB, between two or more glass sheets and between each pair of glass sheets. The intermediate layers are then adhered to the corresponding glass sheets by passing the glass sheet-intermediate layer assembly through one or more roller pressing units, universally known as "mangles".

Each known pressing unit comprises a pair of pressing rollers, both motorized and with horizontal, parallel axes arranged one above the other, one of which (generally the lower axis) is fixed while the other is movable parallel to itself from and towards the fixed roller in order to allow sheets of different thicknesses to be pressed.

Known pressing units are differentiated and characterized by the trajectory followed by the axis of the movable roller when moving towards the fixed roller. Indeed, a first group of machines includes pressing units in which the movable roller moves parallel to itself, maintaining its axis in a vertical lying plane in which the axis of the fixed roller also lies.

On the other hand, a second group of machines includes those pressing units in which the movable roller is carried by a substantially non-deformable, robust fork-like frame which is hinged to a fixed structure in order to move the axis of the same movable roller along a circular trajectory.

The units belonging to the first group, even if used, require that the sheet is perfectly centered on the rollers, i.e. that the opposite sides of the sheet are arranged at the same distance from the opposite axial edges of the roller tables. Only in this way, indeed, the parallelism uniformity between the axes of the rollers and the pressing action uniformity along the entire roller-sheet contact line may be ensured. Some units include devices to compensate for the eccentricity of the sheet, but such machines are particularly complex, costly and difficult to be controlled.

The units belonging to the second group of machines, although they are insensitive to the position of the sheet with respect to the longitudinal edges of the rollers, are insufficiently satisfactory as they tend to bend the sheet because of the rigidity of the fork-like frame. Indeed, during its movement from and to the fixed roller, the movable roller moves through a curved trajectory, whereby it moves forward or backward with respect to a vertical lying plane of the axis of the fixed roller with the inevitable generation of a bending torque on the sheet itself.

The object of the present invention is to provide a pressing unit for a laminated glass sheet, which allows the problems connected to the above-mentioned known solutions to be simply solved.

According to the present invention, a roller pressing unit is provided for forming a laminated glass sheet comprising at least two side glass sheets and at least one intermediate layer of thermoplastic material interposed between the glass sheets; the unit comprising a fixed frame, a first pressing roller pivotally hinged to said fixed frame about an axis thereof, a second pressing roller parallel to said first pressing roller, and actuating means for moving said second pressing roller from and towards said first pressing roller; said actuating means comprising a swinging structure hinged to said frame and carrying said second pressing roller, and actuating means for rotating said swinging structure with respect to said fixed frame about a fixed hinge axis parallel to the axes of said rollers, characterized in that said actuating means further comprise hinging and guiding means interposed between said swinging structure and said second pressing roller to move the axis of said second roller in a straight direction intersecting the axis of said first pressing roller during the rotation of said swinging structure about said fixed hinge axis.

The invention will now be described with reference to the accompanying drawings, which illustrate two embodiments thereof by way of nonlimiting examples, in which:
figure 1 is a perspective view of a first preferred embodiment of a pressing unit provided according to the dictates of the present invention;
figures 2 and 3 show side elevation views of the unit in figure 1 arranged in two different functional conditions;
figure 4 is an enlarged perspective view of a detail of the figures from 1 to 3; and
figure 5 diagrammatically shows a side elevation view of a second preferred embodiment of the pressing unit according to the present invention.

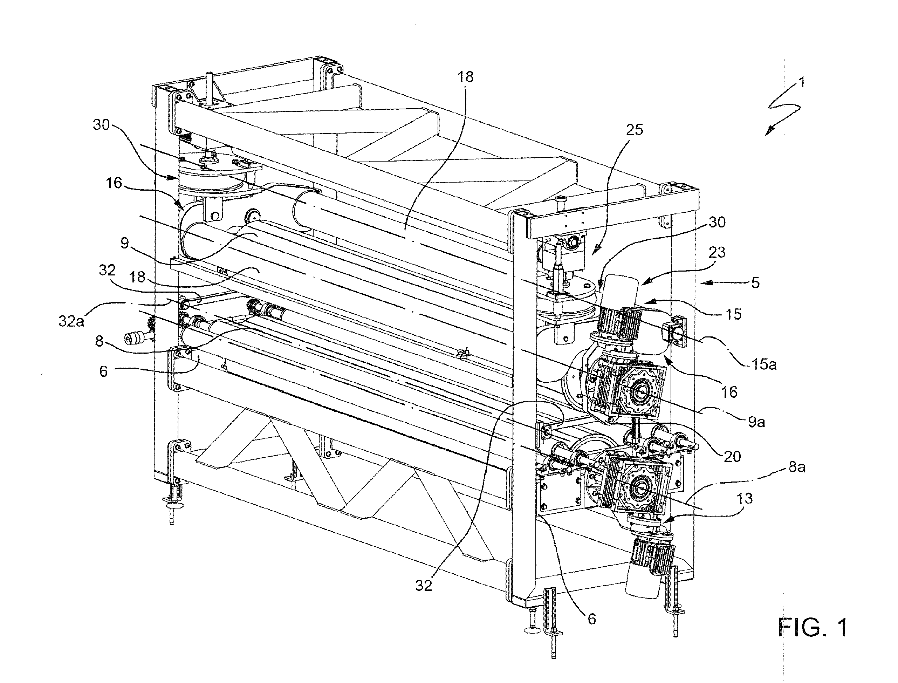

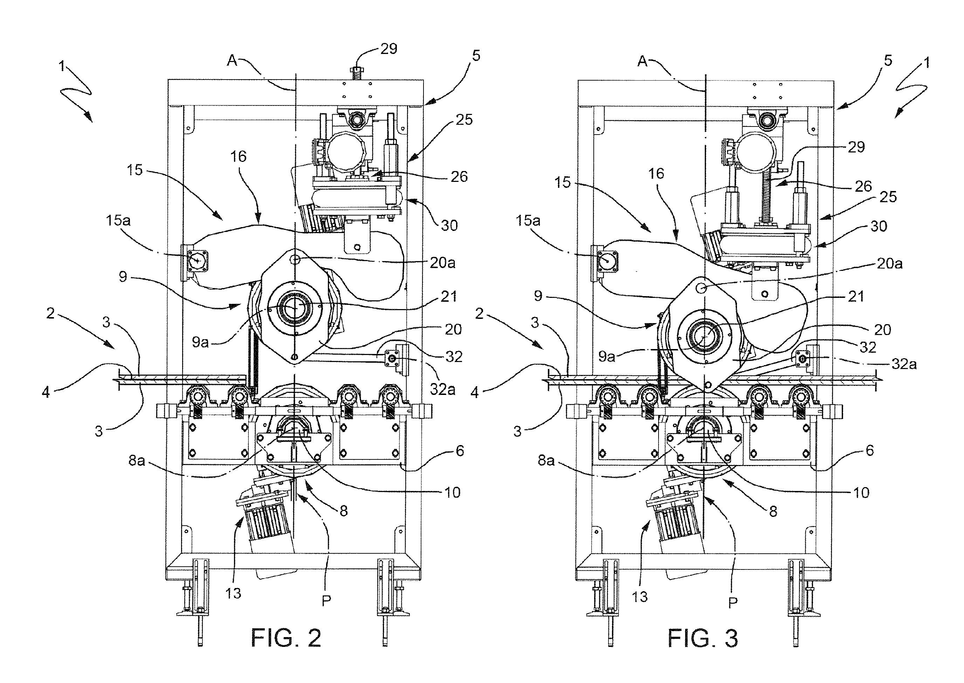

In figures 1 to 3, numeral 1 indicates as a whole a roller pressing unit for forming a laminated glass sheet 2 (figures 2 and 3) comprising, in the particular example described, two external glass sheets 3 and at least one intermediate layer 4 of thermoplastic material.

Unit 1 comprises a fixed frame 5 having two lateral crosspieces 6 facing each other, and a pair of pressing rollers, indicated by 8 and 9. Roller 8 extends between the lateral crosspieces 6 and has each hinge pivot 10 thereof coupled to a corresponding lateral crosspiece 6 in order to rotate about a fixed hinge axis 8a under the bias of a known geared motor assembly 13 (not described in detail).

Roller 9 extends parallel to and above roller 8 and is pivotally supported about an axis 9a thereof parallel to the axis 8a by a swinging structure 15 (figures 1-3).

Structure 15 comprises two lateral handles 16 and two long members 18 parallel to axis 8a and integrally connected to the handles 16 in positions spaced apart from each other to define, together with the handles 16, a rigid structure, i.e. practically torsionally non-deformable under load. Structure 15 is hinged to frame 5 in order to rotate about a fixed hinge axis 15a parallel to axis 8a and carries roller 9 pivotally hanging by means of a pair of connecting rods 20. Each of the connecting rods 20 is hinged to an intermediate portion of the respective handle 16, on one side, in order to swing about a fulcrum axis 20a parallel to axis 8a and, on the other side, it hingedly carries a corresponding hinge pivot 21 of roller 9 coaxial to an axis 9a of the roller 9 itself. One of the two connecting rods 20 also supports a geared motor assembly 23 for driving roller 9.

Structure 15 may rotate in opposite directions about axis 15a under the bias of a moving assembly 25 in order to move axis 9a of roller 9 in a straight direction A orthogonal to the axes 8a and 9a and lying in a substantially vertical, fixed lying plane P of the same axes 8a and 9a between two end stop positions, one position of which is raised as shown in figure 2, and the other is lowered, as shown in figure 3.

With reference again to figures 1 to 3, for each connecting rod 20, assembly 25 further comprises a corresponding tie-rod/push-rod 32, an end portion of which is hinged to an intermediate portion of the corresponding connecting rod 20 and an opposite end portion of which is hinged to the fixed frame 5 in order to rotate about an axis 32a parallel to the axes 8a, 9a and 15a.

The function of such tie-rods/push-rods 32 is to allow the connecting rods 20, and therefore roller 9, to define a practically vertical movement in the field of adjustment of the distance of roller 9 from roller 8, as the system formed by structure 15, connecting rods 20 and push-rods/tie-rods 32 forms an articulated quadrilateral.

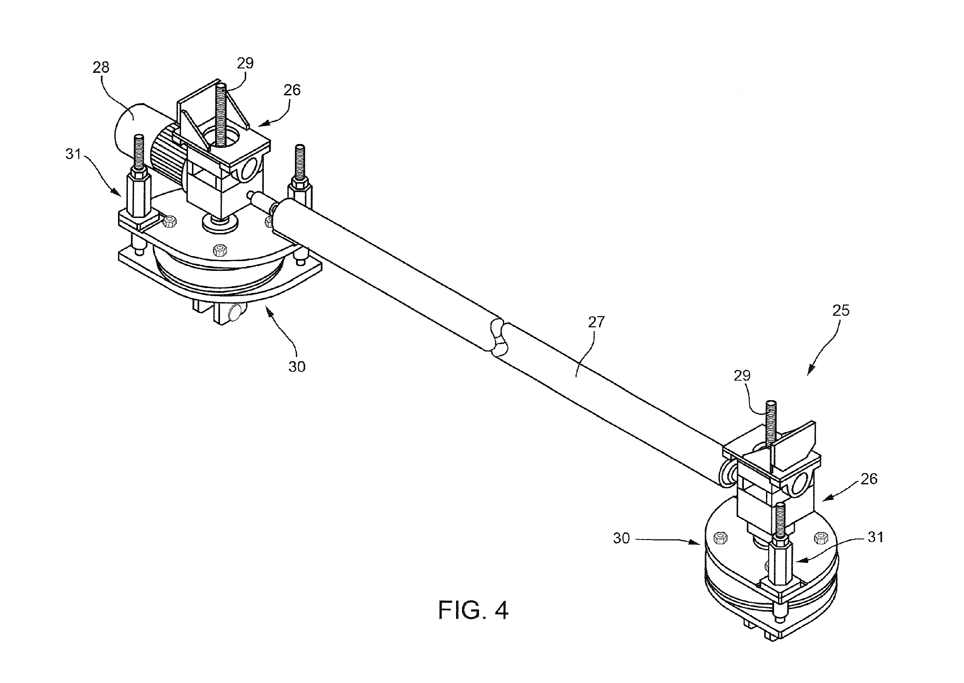

With reference to figures 1 to 3, and in particular to figure 4, for each handle 16, assembly 25 comprises a corresponding screw-female screw device 26; devices 26 are connected to each other by a torsion bar 27 and are both activated by a single electric motor 28. The screw 29 of each device 26 is movable in a vertical direction parallel to direction A and carries, coupled to a lower free end thereof, a corresponding pneumatic spring 30, which forms part of assembly 25 and comprises a spring preloading device 31 thereof, known per se and not described in detail, also forming part of assembly 25.

The function of the pneumatic springs 30 is to exert the biasing force which, by means of the swinging structure 15, is transmitted to roller 9 in order to obtain the pressing force necessary for the process. The force is controlled by varying the feeding pressure of the pneumatic springs 30 by means of a control system, known per se and not described in detail.

The function of the screw-female screw assemblies 26 is to adjust, by means of the bias of motor 28 and torsion bar 27, the distance between the rollers 9 and 8 depending on the thickness of the laminated glass sheet to be pressed. The distance between the rollers 8 and 9 is measured by means of a position transducer, not shown in the accompanying figures.

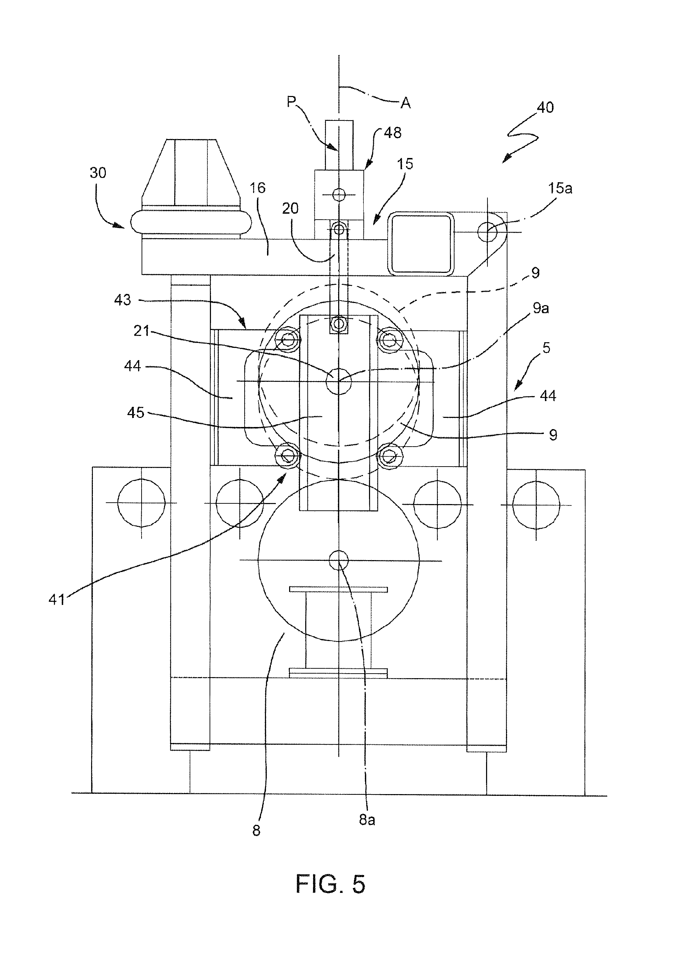

The embodiment shown in figure 5 relates to a pressing unit 40, which differs from unit 1 in some constructional details and the constituent parts of which are marked, where possible, with the same reference numbers as the corresponding parts of unit 1.

In unit 40, roller 9 is not hung from the structure 5 and directly connected to the connecting rods 20, but is coupled to a guide-slide system 41 adapted to guide the axis 9a of the second roller along the straight direction A.

With reference again to figure 5, for each hinge pivot 21 of roller 9, system 41 comprises a corresponding guide-slide assembly 43, in turn comprising a pair of guides 44 fixed to the frame 5 and a slide 45 which may slide along the guides 44 parallel to direction A and hingedly carrying the corresponding hinge pivot 21. The connecting rods 20 each have an end portion hinged to a linear actuator carried by the swinging structure 15 and an opposite portion hinged to the corresponding slide 45 in order to rotate about respective axes parallel to the axes 8a and 9a of rollers 8 and 9.

With reference again to figure 5, in unit 40, the air springs 30 are interposed between frame 5 and the corresponding lever 16.

From the foregoing, it is apparent how the described units 1 and 40 have the double advantage of being insensitive to the position of sheet 2 with respect to the end edges of the pressing rollers and of avoiding unwanted bending of the same sheet 2 upon the pressing action exerted by said pressing rollers.

The foregoing is essentially due to that, on the one hand, both the units 1 and 40 use a structure 15 hinged to frame 5 and of such rigidity as to withstand various biases acting on the pivots 21 of roller 9 due to the failed centering of sheet 2 and, on the other hand, the upper roller 9 is moved from and towards the lower roller 8 along a trajectory A which is vertical, straight and fixed with respect to frame 5 and which intersects axis 8a of the lower roller 8.

In the case of unit 1, the movement along the above-mentioned trajectory A is obtained by hanging the roller 9 to the structure 15 by means of a pair of connecting rods and coupling each connecting rod to the frame by means of a tie-rod/push-rod, thus providing, together with the connecting rods 20, a quadrilateral which controls the position of roller 9 with respect to structure 15 during the rotation of structure 15 about axis 15a.

Instead, in the case of unit 40, the pivots 21 of roller 9 are coupled to the guide-slide assembly 43 in order to oppositely translate in the direction A, and slide 45 is secured to structure 15 by means of the pair of connecting rods 20 which perform the simple action of pulling/pushing slide 45.

With regard again to unit 1, the position of structure 15 with respect to frame 5 and of roller 9 with respect to roller 8 is adjusted by a simplified, cost-effective transmission assembly which uses a pair of screw actuators activated by a single motor. Thereby, the movement control of pivots 21 is simplified and the same rotation is ensured for both handles 16 about the respective axes 15a.

On the other hand, the preloaded air springs 30 ensure an equal desired bias on both the pivots 20 of roller 9.

From the foregoing, it is apparent that modifications and variations can be made to the described units 1 and 40. In particular, by way of example, structure 15 may differ from the structure described, as well as the moving assembly of the same structure 15 may be different.

## Claims

1. A roller pressing unit for forming a laminated glass sheet comprising at least two side glass sheets and at least one intermediate layer of thermoplastic material interposed between the glass sheets; the unit comprising a fixed frame, a first pressing roller pivotally hinged to said fixed frame about an axis thereof, a second pressing roller parallel to said first pressing roller, and actuating means for moving said second pressing roller from and towards said first pressing roller; said actuating means comprising a swinging structure hinged to said frame and carrying said second pressing roller, and actuating means for rotating said swinging structure with respect to said fixed frame about a fixed hinge axis parallel to the axes of said rollers, **characterized in that** said actuating means further comprise hinging and guiding means interposed between said swinging structure and said second pressing roller to move the axis of said second roller in a straight direction intersecting the axis of said first pressing roller during the rotation of said swinging structure about said fixed hinge axis.

2. A unit according to claim 1, **characterized in that** said hinging and guiding means comprise supporting means for keeping said second pressing roller hanging from said swinging structure; hinge means for pivotally coupling said supporting means to said swinging structure about a fulcrum axis parallel to the axes of said pressing rollers, and angular fastening means of said supporting means with respect to said fixed frame.

3. A unit according to claim 2, **characterized in that** said angular fastening means comprise tie-rod/pushrod means interposed between said supporting means and said fixed frame.

4. A unit according to claim 2 or 3, **characterized in that** said supporting means comprise a pair of connecting rods arranged on axially opposite sides of said second pressing roller and hinged to said second pressing roller and to said swinging structure coaxially to said fulcrum axis; at least one further connecting rod being hinged to one of said connecting rods and to said fixed frame to rotate about a respective axis parallel to the axes of said pressing rollers.

5. A unit according to claim 4, **characterized in that** it comprises a pair of said further connecting rods.

6. A unit according to any one of the preceding claims, **characterized in that** said actuating means comprise a pair of pneumatic pushing springs acting on said swinging structure, and means for adjusting the position of said pneumatic springs along respective axes parallel to said straight direction.

7. A unit according to claim 6, **characterized in that**, for each pneumatic spring, said adjustment means comprise a screw transmission and a single electric motor for actuating said transmission.

8. A unit according to claim 6 or 7, **characterized in that** each of said pneumatic springs comprises respective preloading means of said corresponding pneumatic spring.

9. A unit according to claim 1, **characterized in that**, for each end portion of said second pressing roller, said hinging and guiding means comprise a respective guide-slide assembly for guiding the axis of said second pressing roller along said straight direction, and at least one connecting rod coupled to said swinging structure and to one slide of the respective guide-slide assembly to rotate about respective axes parallel to the axis of said second pressing roller.

10. A unit according to claim 9, **characterized in that** each of said connecting rods is coupled to said swinging structure by means of a linear actuator carried by said swinging structure.
